# EUROPÄISCHE PATENTSCHRIFT

(11) **EP 1 051 014 B1**
(45) Veröffentlichungstag und Bekanntmachung des Hinweises auf die Patenterteilung: **19.01.2005**
(21) Anmeldenummer: 00106576.2
(22) Anmeldetag: 27.03.2000
(51) Int. Cl.: H04M 1/725, H04M 11/04

(54) **Mobiltelefon mit Notruffunktion**
Mobile telephone with an emergency call function
Téléphone mobile muni d'une fonction d'appel d'urgence

(30) Priorität: 25.03.1999 DE 19913518
(43) Veröffentlichungstag der Anmeldung: 08.11.2000
(73) Patentinhaber: Atzkern, Georg, 86505 Münsterhausen (DE)
(72) Erfinder: Atzkern, Georg, 86505 Münsterhausen (DE)
(74) Vertreter: Gallo, Wolfgang, Dipl.-Ing. (FH)

(56) Entgegenhaltungen:
- EP-A- 0 682 434
- WO-A-98/27714
- DE-A- 3 839 959
- DE-A- 4 421 508
- DE-A- 19 650 176
- DE-A- 19 729 645
- US-A- 5 742 666
- US-A- 5 758 267

## Beschreibung

Mobiltelefone, nämlich Funktelefone, sogenannte Handys, und schnurlose Festnetz-Telefone, ermöglichen heutzutage aufgrund der Mikroelektronik vielfache Funktionen wie beispielsweise Rufnummernspeicherung, Wahlwiederholung, Senden und Empfangen kurzer Botschaften (Mailbox-Funktion).

Aufgabe der Erfindung ist es, solche Mobiltelefone mit einer automatischen Notruffunktion auszustatten. Ein solches Mobiltelefon wird in DE 197 29 645 A veröffentlicht.

Als Einsatzgebiete kommen alte und gebrechliche Personen, gesundheitlich labile Personen, oder in gefährlichen Bereichen allein arbeitende Personen in Betracht.

Zur Lösung der o.g. Aufgabe ist ein Mobiltelefon entsprechend dem Patentanspruch 1 ausgebildet.

Erfindungsgemäß ist vorgesehen, daß eine automatische Notrufauslösung lageabhängig dann erfolgt, wenn sich das Mobiltelefon in eingeschaltetem Zustand länger als eine vorgegebene kurze Zeitspanne in einer etwa horizontalen Lage befindet, was darauf hindeutet, daß die damit ausgerüstete Person in einem hilflosen Zustand befindet.

Erfindungsgemäß wird das dadurch realisiert, daß in das Mobiltelefon ein Quecksilberschalter oder dergleichen eingebaut wird, der einen Notruf-Auslösestromkreis schließt, wenn sich das Mobiltelefon in einer etwa horizontalen Lage befindet, das weiter in den Notruf-Auslösestromkreis ein dem Quecksilberschalter nachgeschaltetes Verzögerungsglied mit vorgegebener oder einstellbarer Zeitverzögerung eingeschaltet ist, und daß schließlich in das Mobiltelefon eine entsprechende Notruffunktion eingebaut ist, die nach Ablauf der Verzögerungszeit des Verzögerungsglieds aktiviert wird.

Das Prinzip der Erfindung ist in der anliegenden Zeichnung in Form eines Blockschaltbilds dargestellt.

Innerhalb des Mobiltelefons 1 ist eine automatische Notruffunktion installiert. Die eigentliche Mobiltelefon-Schaltung einschließlich aller anderweitigen Sonderfunktionen ist in dem Blockschaltbild weggelassen. Das Blockschaltbild zeigt nur die ebenfalls an die Batterie 2 des Mobiltelefons angeschlossene automatische Notruf-Funktionsschaltung 3. Diese enthält einen Quecksilberschalter 4, der im Mobiltelefon 1 so eingebaut ist, daß er schließt, wenn das Mobiltelefon eine etwa horizontale Lage einnimmt, bei anderer Orientierung des Mobiltelefons jedoch geöffnet ist. Der Stromkreis der Notruf-Funktionsschaltung 3 führt über diesen Quecksilberschalter 4 zu einem Notrufgeber 5, der bei geschlossenem Stromkreis automatisch einen Notruf absetzt, nämlich eine einprogrammierte Nummer wählt und vorzugsweise zusätzlich eine Kennung oder sonstige Information an die angewählte Empfängerstation übermittelt.

Zwischen dem Quecksilberschalter 4 und dem Notrufgeber 5 ist jedoch noch ein Verzögerungsglied 6 in den Stromkreis eingeschaltet, so daß, wenn der Quecksilberschalter 4 schließt, der Notrufgeber noch nicht sofort aktiviert wird, sondern erst nach Ablauf einer vorgegebenen Verzögerungszeit, die fest eingestellt oder wahlweise programmierbar sein kann.

Wenn eine gebrechliche Person, die das eingeschaltete Mobiltelefon 1 bei sich trägt oder eine in einem gefährlichen Bereich arbeitende Person, die das Mobiltelefon bei sich trägt, ohnmächtig wird und umfällt, so daß das Mobiltelefon in eine etwa horizontale Lage kommt, schließt der Quecksilberschalter 4 und aktiviert über das Verzögerungsglied 6 nach der vorgegebenen Verzögerungszeit von beispielsweise 20 Sekunden den Notrufgeber 5. Es versteht sich, daß die das Mobiltelefon benutzende Person das Mobiltelefon in einer etwa vertikalen Normallage bei sich trägt, beispielsweise am Gürtel, in der Brusttasche oder in ähnlicher Weise. Das Verzögerungsglied 6 stellt sicher, daß der Notrufgeber 5 nicht anspricht, wenn das Mobiltelefon nur vorübergehend eine etwa horizontale Lage einnimmt, beispielsweise weil die es benutzende Person sich bückt oder dergleichen.

Für den Empfang gesendeter Notrufe können besondere Empfangsnummern eingerichtet werden, die nur zum Notrufempfang dienen, beispielsweise bei Sozialstationen, Polizeistationen oder in Betrieben oder bei Angehörigen gebrechlicher Personen, in Altenheimen oder sonstigen Betreuungseinrichtungen. Der Notrufgeber kann bei der Anwahl der Notrufnummer eine Kennung senden, die das den Notruf absetzende Mobiltelefon identifiziert, oder die Anordnung kann so getroffen sein, daß das Empfangsgerät, wie das auch im normalen Telefonverkehr vielfach erfolgt, die Nummer des anrufenden Mobiltelefons erfaßt und anzeigt.

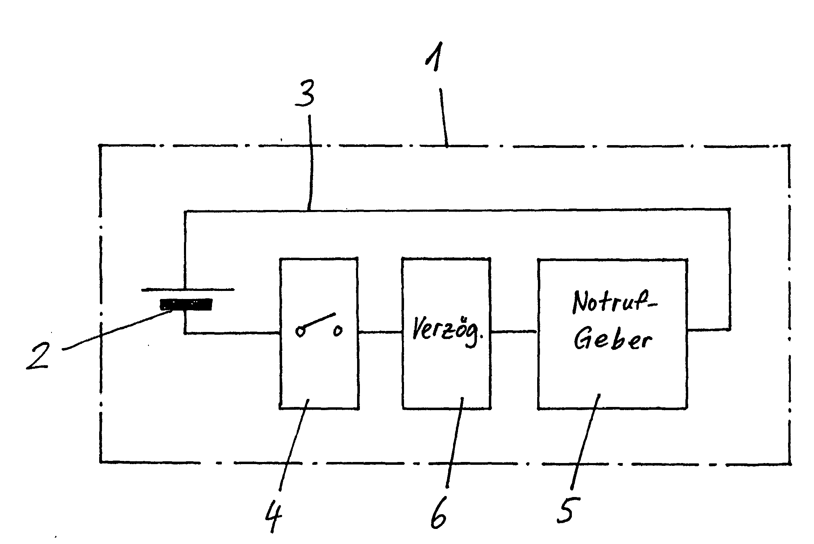

## Patentansprüche

1. Mobiltelefon mit automatischer Notruffunktion in Gestalt einer eingebauten Notruf-Funktionsschaltung (3), die an die Batterie (2) des Mobiltelefons (1) angeschlossen ist **dadurch gekennzeichnet, dass** die Notruf-Funktionsschaltung (3) einen Lagefühler in Form eines Quecksilberschalters (4) enthält, der so in das Mobiltelefon eingebaut ist, daß er schaltet, wenn das Mobiltelefon eine etwa horizontale Lage einnimmt, und wobei dem Quecksilberschalter (4) ein Notrufgeber (5) über ein Verzögerungsglied mit eingestellter oder einstellbarer Verzögerungszeit nachgeschaltet ist, derart, daß beim Schalten des Quecksilberschalters (4) der Notrufgeber (5) nach Ablauf der vom Verzögerungsglied (6) vorgegebenen Verzögerungszeit aktiviert wird.

## Claims

1. A mobile telephone with automatic emergency call function in the form of a built-in emergency call function circuit (3) connected to the battery (2) of the mobile telephone (1), **characterized in that** the emergency call function circuit (3) contains a position sensing device in the form of a mercury switch (4) built into the mobile telephone in such a way that it switches when the mobile telephone assumes an approximately horizontal position, and wherein an emergency call generator (5) is connected to the mercury switch (4) in the downstream direction via a delay element with adjusted or adjustable delay time, so that, when the mercury switch (4) switches, the emergency call generator (5) is activated after the delay time that is predetermined by the delay element (6) has elapsed.

## Revendications

1. Téléphone mobile comprenant une fonction automatique d'appel d'urgence sous la forme d'un circuit (3) incorporé de fonction d'appel d'urgence lequel est connecté à la batterie (2) du téléphone mobile (1), **caractérisé en ce que** le circuit (3) de fonction d'appel d'urgence comprend une sonde de position sous la forme d'un commutateur (4) au mercure intégré dans le téléphone mobile de sorte qu'il réalise une opération de commutation lorsque le téléphone mobile occupe une position approximativement horizontale, un générateur (5) d'appel d'urgence étant monté en aval du commutateur (4) au mercure via un élément de retardement à retard réglé ou réglable, de sorte que le générateur (5) d'appel d'urgence est activé après écoulement de la durée de retardement prédéterminée par l'élément de retardement (6) lorsque le commutateur (4) au mercure réalise une opération de commutation.
